# EUROPEAN PATENT SPECIFICATION

(11) **EP 0 911 438 B1**
(45) Date of publication and mention of the grant of the patent: **28.11.2001**
(21) Application number: 98115665.6
(22) Date of filing: 20.08.1998
(51) Int. Cl.: D06F 39/00

(54) **Automatic washing machine with energy recovery arrangement**
Waschmaschine mit Einrichtung zur Energierückgewinnung
Machine à laver avec dispositif de récupération d'énergie

(30) Priority: 27.10.1997 IT PN970058
(43) Date of publication of application: 28.04.1999
(73) Proprietor: Electrolux Zanussi S.p.A., 33170 Pordenone (IT)
(72) Inventor: Milocco, Claudio, 34100 Trieste (IT)
(74) Representative: Busca, Luciano

(56) References cited:
- EP-A- 0 669 097
- EP-A- 0 771 898
- US-A- 2 931 199

## Description

### DESCRIPTION

The present invention refers to an automatic washing machine, in particular a dishwashing machine, provided with an arrangement adapted to enable water and, preferably, also heat to be recovered in view of obtaining an overall energy saving effect.

Washing machines provided with arrangements for recovering water and, possibly also heat from previously heated-up water are already largely known in the art.

A dishwashing machine is for instance known from EP-A-0 669 097 to be provided with a reservoir adapted to store the water from the last or final rinse phase of the machine in view of using it again as wash water during a subsequent washing cycle of the same machine.

On the other hand, as disclosed in EP-A-0 287 990, the heat contained in the hot water being discharged, ie. sent to the drain, can be transferred by means of a heat exchanger to the fresh inflow water let into a washing machine for a subsequent washing cycle which the same washing machine is required to perform.

However, prior-art solutions developed in view of recovering water and/or heat are undesirably complex and unreliable, owing mainly to the fact that they generally require a number of actuators, with related control means, to control the operation of at least a water storage reservoir and the therewith associated energy recovery system.

A particularly simple solution in view of an effective energy recovery action is described in EP-A-0 800 785, in which a multifunctional reservoir is provided to communicate with the washing vessel of a dishwashing machine via a bottom aperture connected directly to the delivery side of a discharge pump. The reservoir is in a heat-exchange relation with the vessel and communicates with the ambient through a valve that is controlled by the programme sequence control switch of the machine to open during a discharge phase so as to enable the reservoir to be filled with hot water being discharged from the washing vessel of the machine. The same valve is then closed temporarily to prevent the reservoir from emptying; it is finally opened again in order to enable the water stored in the reservoir to flow back into the washing vessel of the machine, through said bottom aperture, in view of being used again.

Such a solution, however, turned out to be undesirably critical in practice, owing mainly to the difficulties found in preventing substantial water losses to occur in the long run in correspondence of said bottom aperture of the reservoir, whereas said water should on the contrary be stored in the same reservoir. This is due in particular to undesired variations in the volume of the reservoir which may be brought about by variations in the pressure under static conditions, as well as by critical sealing conditions concerning the tightness of the controlled valve, with resulting water seeping through the bottom of the reservoir. As a result, the machine turns out to be undesirably unreliable in its overall operation.

In addition, the use of an electromechanical component part such as the above cited controlled valve, even if to be considered as particularly reliable in itself, causes the manufacturing costs of the machine to be increased to an undesired extent.

It therefore is a main purpose of the present invention to provide an automatic washing machine provided with an energy recovery arrangement that is not only simple and effective, but also positively reliable in the long run.

A further purpose of the present invention is to provide a washing machine of the above cited kind, whose energy recovery arrangement can be controlled according to the requirements without any need arising for any additional electromechanical component part to be used.

According to the present invention, such an aim is reached in an automatic washing machine with an energy recovery arrangement embodying the features and characteristics as recited in the appended claims.

The features and advantages of the present invention will anyway be more readily understood from the description which is given below by way of non-limiting example with reference to the accompanying drawing, in which:

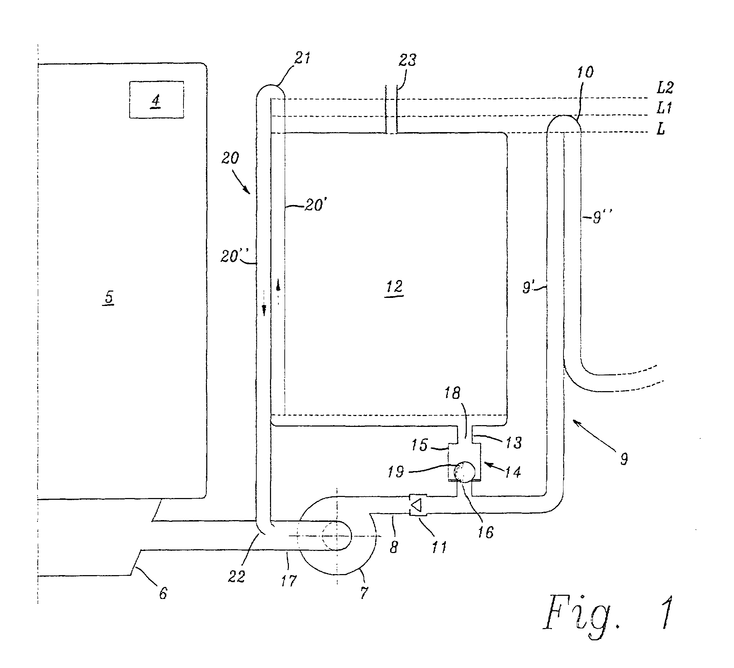

- Figures 1 to 3 are schematical views of the main component parts of such a washing machine according to a preferred embodiment of the present invention, in respective operating conditions thereof.

Said automatic washing machine is preferably a domestic dishwashing machine provided with an electronic programme sequence control unit 4 that is capable of being most simply and conveniently set in order to control the main operational component parts of the machine, as this will be described in greater detail further on.

With reference to the above cited Figures, said dishwashing machine comprises mainly a washing vessel 5 provided on the bottom with a sump 6 for collecting the water that can be heated up there by means of an electric heating element. For reasons of greater simplicity of this description, such a heating element is not shown in the Figures. The same applies to the water filling circuit, ie. the circuit provided to let the water into the vessel 5. Both said element and said circuit can anyway be implemented as described in the afore mentioned EP-A-0 800 785.

The sump 6 is in communication with the intake or suction side 17 of a motor-driven discharge pump 7, whose delivery 8 is connected to a discharge conduit 9 through a check valve 11. The discharge conduit is of the siphon-like type comprising a rising or ascending portion 9' and a descending portion 9'' which form an overflow arrangement 10 having a pre-determined overflow level L.

The pump 7 is adapted to be selectively operated by the programme sequence control unit 4 at three different rotation speeds, ie. RPMs, that are pre-set in accordance with the overall sizing of the dishwashing machine and, in particular, the hydraulic characteristics of the energy recovery arrangement thereof. Such different rotational speeds of the pump will be defined as high speed A, low speed B and medium speed M in the following description, wherein said medium speed M has to be understood as being a speed situated anywhere between the values of the speed A and the speed B.

The delivery 8 of the pump 7 is also connected, preferably downstream of the check valve 11 and upstream of the siphon 9', 9", with the bottom of at least a collecting reservoir 12 via a substantially vertical pipe 13 provided with valve means 14 that are hydraulically controlled in the way that will be described in greater detail further on.

In a preferred embodiment, said valve means 14 comprise a chamber 15 provided with a lower aperture 16 and an upper aperture 18 communicating with the discharge conduit 9 and the bottom of the reservoir 12, respectively. The chamber 15 houses at least a shutter 19 comprising for instance a ball having a greater specific weight than the one of water and adapted to selectively close said apertures 16 and 18 as described further on.

The reservoir 12 is substantially of the closed type, with its top portion extending substantially up to said level L; furthermore, the collecting reservoir is preferably arranged on the outside of the washing vessel 5, with which it may however be in a heat-exchange relation such as this is described for instance in the afore mentioned EP-A-0 800 785.

In any case, the reservoir 12 is adapted to communicate with the suction or intake 17 of the pump 7 via a siphon-like arrangement 20 formed by an ascending portion 20' and a descending portion 20'' that form an overflow arrangement 21 having a pre-determined overflow level L2 > L. The ascending portion 20' extends preferably starting from the bottom of the reservoir 12, whereas the descending portion 20" terminates with at least an ejector device 22 arranged substantially in correspondence of the intake 17 of the pump 7. Said ejector 22 can advantageously be of any type, even a coarse one, and does not therefore have any criticalness as far as its construction and/or its operation are concerned. In practice, the ejector 22 is a simple dynamic connection of the siphon 20 with the intake of the pump 7, this being a connection in correspondence of which a condition of substantial negative hydraulic pressure takes place under determined operating conditions of the pump 7 as this will be described in greater detail further on.

Finally, the reservoir 12 preferably comprises at least an upper venting aperture 23 adapted to communicate with the outside ambient at a higher level than the afore cited level L2.

In a per sè known manner, the washing vessel 5 is capable of being filled with water from the mains for carrying out, under the control of the programme sequence control unit 4, operational cycles that comprise at least a washing phase and/or at least a rinsing phase. Furthermore, as this will be described in greater detail further on, the reservoir 12 is adapted to store at least part of the water from at least one of the above cited washing and/or rinsing phases in view of enabling it to be used again during a subsequent operational phase of the machine. Therefore, the general operation of the dishwashing machine is substantially known, so that only the peculiar functional features of the automatic washing machine according to the present invention will be described below by way of non-limiting example.

### Filling the reservoir

With reference to Figure 1, let us now assume that the dishwashing machine has completed a traditional washing or, preferably, a rinsing phase, so that the collection sump 6 is full of preferably heated-up water that is desirably recovered in view of a subsequent reutilization thereof.

The programme sequence control unit 4 of the machine causes the pump 7 to operate at its low rotational speed B, which is set at such a value as to ensure that the ejector 22 is ineffective, so as to avoid creating any substantial suction effect through the siphon 20. The water contained in the sump 6 is dent towards the drain, through the valve 11, with a force that is practically not sufficient to allow it to substantially go over the overflow level L of the siphon 9. The water at the delivery side of the pump 7 has anyway a pressure that is sufficient to enable it to rise up to a certain height along the ascending portion 9' of the siphon 9, and sufficient also to move the shutter 19 away from the lower aperture 16 of the chamber 15, whithout however causing the upper aperture 18 thereof to be shut (Figure 2).

In this way, both apertures 16 and 18 of the chamber 15 are now open, so that the water at the delivery side of the pump 7 is capable of flowing into the reservoir 12, which can be filled up to said level L. Only excessive water that may possibly be pumped in by the pump 7 beyond said level L will therefore be sent to the drain, without altering or affecting the filling up of the collecting reservoir 12.

### Water discharge from the washing vessel with a filled-up reservoir

The water that is so stored in the reservoir 12 is kept there until it is used again in a subsequent operational cycle of the machine. In the meantime, the heat-exchange process taking place between the reservoir 12 and the washing vessel 5 enables also heat to be recovered from the water stored in the reservoir in the case that such a water has been previously heated up. Furthermore, the operation of the machine can go on through one or more substantially traditional operational phases, at the end of which it may be necessary for water to be discharged from the washing vessel 5 of the machine without the reservoir 12 having to be emptied.

To this purpose, the programme sequence control unit 4 causes the pump 7 to operate at its medium rotational speed M, which is set at such a value as to cause the ejector 22 to be still substantially ineffective, so as to create through the siphon 20 a slight suction effect acting on the water contained in the reservoir 12. In particular, the water in the ascending portion 20' of the siphon rises in this phase up to a level L1 which is intermediate between the levels L and L2 and, therefore, not sufficient to cause the siphon 20 to be primed.

On the other hand, the shutter 19 remains in its normal resting position (Figure 1), in which it shuts the lower aperture 16 of the chamber 15. This is due to the fact that the dead weight of the ball 19 and the downward thrust that said ball receives from the water contained in the reservoir 12 are such as to overcome and positively oppose the dynamic and static pressure of the water downstream of the pump 7 and upstream of the aperture 16, respectively.

As a result, the water contained in the sump 6 is sent to the drain by the pump 7, through the valve 11, with a force that is sufficient to substantially go over the overflow level L of the siphon 9, wherein only the water contained in the sump 6 is conclusively discharged.

### Water discharge from both vessel and reservoir

Under certain conditions, it may be desirable for both the water contained in the washing vessel 5 of the machine and the water stored in the reservoir 12 to be discharged.

To that purpose, the programme sequence control unit 4 of the machine causes the pump 7 to operate at its high rotational speed A, which is set at such a value as to enable the ejector 22 to be operative so as to draw in the water contained in the reservoir 12 via the siphon 20, in such a manner as to enable the water in the ascending portion 20' of said siphon to rise above the level L2, thereby priming the same siphon.

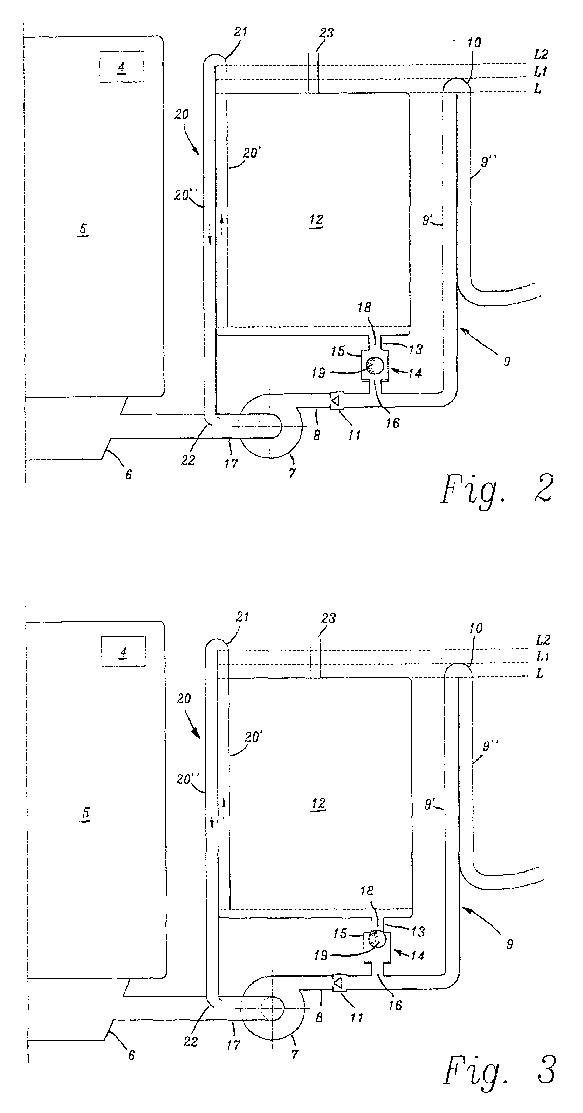

The water stored in the reservoir 12 is then transferred from the siphon 20 towards the intake side of the pump 7, which delivers it to the drain 9 along with the water contained in the sump 6. The water that the pump 7 so delivers to the drain has of course a sufficient force to move over the overflow level L of the siphon 9 and to raise the shutter 19 so as to cause it to close the aperture 18 of the reservoir 12, as this is illustrated in Figure 3.

It should anyway be noticed that the siphon 20 is preferably arranged so as to let the water out of the reservoir 12, when the same siphon is primed and made operative, in a not really complete manner, ie. to empty said reservoir 12 in such a manner as to leave on the bottom of the reservoir 12 itself a minimum residual volume of water such as required for example to enable one of the hereinafter described operational phases of the machine to be carried out in a correct manner.

### Reclaiming water from the reservoir

When the need arises for the water stored in the reservoir 12 to be reclaimed in view of its reutilization in the dishwashing machine for carrying out a subsequent operational phase thereof (for instance a wash or pre-wash phase), said operational phase is of course started with the collecting sump 6 of the machine which is substantially empty, ie. it just contains a minimum residual quantity of water such as required to enable the pump 7 to be primed.

The programme sequence control unit 4 of the machine causes the pump 7 to only temporarily (for instance, for just a few seconds) at its high operational speed A. As it has been already described above, therefore, the ejector 22 starts drawing in the water stored in the reservoir 12, via the siphon 20, in such a manner as to enable the water in the ascending portion 20' of said siphon to rise above the level L2, thereby priming the same siphon.

The pump 7 is then de-energized again, so that the shutter 19 falls by gravity to shut the aperture 16 (as this is illustrated in Figure 1) and the water that from the reservoir 12 is being transferred to the intake side 17 of the pump via the siphon 20 and the ejector 22 flows back by gravity into the washing vessel 5, where it collects in the sump 6 in view of being used according to the needs.

As said before, a minimum residual quantity of water remains preferably on the bottom of the reservoir 12.

### Water discharge from the washing vessel with an empty reservoir

Let us now assume that the reservoir 12 is empty and the dishwashing machine is required to carry out a traditional water discharge phase for letting the water out of the washing vessel 5 into the drain.

In this case, the programme sequence control unit 4 causes the pump 7 to operate at its high speed A, so that the water contained in the sump 6 is sent to the drain, via the valve 11, with such a force as to enable it to move over the overflow level L of the siphon 9 and the raise the shutter 19 so as to cause it to shut the aperture 18 of the reservoir 12, as this is illustrated in Figure 3. In fact, since the reservoir 12 is substantially empty in this phase, the thrust, ie. the pushing force exerted by the delivery of the pump 7 on the shutter 19 has in this case to only overcome the weight of the same shutter.

Therefore, it should be noticed that, although the reservoir 12 is substantially empty, the pump 7 does not draw in air through the ejector 22, since the residual water available on the bottom of the same reservoir seeps into the ascending portion 20' of the siphon 20, which therefore is practically plugged. As a result, the pump 7 is able to advantageously operate under favourable priming conditions and is in a position as to send the water contained in the sump 6 to the drain 9 with a sufficient force as to enable it to move over the level L.

Since the presence of the above cited residual quantity of water in the reservoir 12 may prove important in certain operational phases of the machine, the upper aperture 18 of the chamber 15 is preferably adapted so as to allow for a calibrated seepage of the water therethrough even when it is substantially shut by the shutter 19. For instance, this may be simply obtained by solely providing the lower opening 16 with a rubber sealing gasket, or the like, that enables it to be tightly shut by the ball-type shutter 19, whereas the upper aperture 18 is therefore not provided with any such a sealing means.

In any case, the water seepage towards the reservoir 12 that takes place each time that the shutter 19 is moved into the position that is illustrated in Figure 3, is such as to ensure the presence of the afore mentioned residual level of water in the same reservoir.

The above cited calibrated seepage through the aperture 18 is such as to also ensure a correct operation of the whole dishwashing machine in the case that, at the end of a water discharge phase, a residual water column remains in the conduit 9 to exert such a pressure on the shutter 19 as to practically keep it raised in its position in which it shuts the aperture 18. It clearly emerges from the above description that such conditions could practically jeopardize a correct operation of the machine. On the contrary, the above described calibrated seepage enables the above cited residual water column to flow into the reservoir 12 (thereby contributing to the formation of the afore described residual level of water) until a pressure balance condition is brought about such as to enable the shutter 19 to switch back again by gravity into its normal position in which it shuts the lower aperture 16. At this point, the operation of the dishwashing machine can go on correctly in the described manner.

It clearly emerges from the above description that the washing machine according to the present invention is provided with an energy recovery arrangement operating in a simple and versatile manner, without any need arising for any additional electromechanical component part to be used in that connection.

As a matter of fact, in all of the above described operational phases of the machine, the operation of the siphons 9 and 20, as well as the actuations of the valve 14, are controlled selectively, according to the different conditions of the hydraulic system of the machine, by the different rotational speeds at which the pump 7 is caused to operate.

The latter is an operational element that is already present in the machine and performs advantageously also as actuating means for governing the energy recovery arrangement associated to the reservoir 12, under control of the programme sequence control unit 4 of the machine.

## Claims

1. Automatic washing machine comprising a washing vessel (5) connected to a drain conduit through a pump (7) and fillable with water to carry out, under the control of a programme sequence control unit (4), operational cycles comprising at least a washing phase and/or a rinsing phase, said washing machine further including at least a reservoir (12) adapted to store at least part of the water from at least one of said phases in view of a reuse of said water during a subsequent operational phase, **characterized in that** said pump (7) is operable selectively by the programme sequence control unit (4) at a first low rotational speed (B), a second medium rotational speed (M) and a third high rotational speed (A) thereof, said drain conduit (9) comprising first siphon-like means (9', 9") having a pre-determined overflow level (L), upstream of which said drain conduit (9) is connected to said reservoir (12) via hydraulically controlled valve means (14), at least an ejector device (22) being adapted to put the reservoir (12) in communication with the intake (17) of the pump (7) via further siphon-like means (20) having a pre-determined overflow level (L2).

2. Automatic washing machine according to claim 1, **characterized in that** the overflow level (L) of said first siphon-like means (9', 9") is lower than the overflow level (L2) of said further siphon-like means (20).

3. Automatic washing machine according to claim 2, **characterized in that** said reservoir (12) comprises at least a venting aperture (23) communicating with the outside ambient at a higher level than said overflow level (L2) of said further siphon-like means (20).

4. Automatic washing machine according to claim 1, **characterized in that** said further siphon-like means (20) comprise an ascending portion (20') extending substantially from the bottom of said reservoir (12).

5. Automatic washing machine according to claim 1, **characterized in that** said drain conduit (9) is connected to the bottom of said reservoir (12) through a substantially vertical pipe (13) in correspondence of which there are provided said hydraulically controlled valve means (14).

6. Automatic washing machine according to claim 1, **characterized in that** said valve means (14) comprise a chamber (15) provided with a lower aperture (16) and an upper aperture (18) communicating with said drain conduit (9) and the reservoir (12), respectively, wherein said chamber (15) accomodates at least a shutter (19) having a greater specific weight than water and adapted to substantially shut said apertures (16, 18) in a selective manner.

7. Automatic washing machine according to claim 6, **characterized in that** said upper aperture (18) of said chamber (15) is adapted to allow for a calibrated seepage of water therethrough even in the state in which it is substantially shut by said shutter (19).

8. Automatic washing machine according to claim 1, **characterized in that** said valve means (14) are normally closed and adapted to only open when said pump (7) is operated at said low rotational speed (B) thereof and the reservoir (12) is not filled to its maximum level.

9. Automatic washing machine according to claim 1, **characterized in that** said ejector (22) is arranged in correspondence of the intake (17) of the pump (7) and is adapted to only prime said further siphon-like means (20) when the reservoir (12) is substantially full of water and the pump (7) is operated at said high rotational speed (A) thereof.

## Patentansprüche

1. Automatische Spülmaschine, die einen Spülbehälter (5) umfasst, der mit einer Abflussleitung über eine Pumpe (7) verbunden ist und mit Wasser gefüllt werden kann, um, von einer Programmablauf-Steuereinheit (4) gesteuert, Funktionszyklen auszuführen, die wenigstens eine Spülphase und/oder eine Kiarspülphase umfassen, wobei die Spülmaschine des Weiteren wenigstens einen Vorratsbehälter (12) enthält, der wenigstens einen Teil des Wassers aus wenigstens einer der Phasen speichert, um das Wasser während einer folgenden Funktionsphase wieder zu verwenden, **dadurch gekennzeichnet, dass** die Pumpe (7) wahlweise von der Programmablauf-Steuereinheit (4) mit einer ersten niedrigen Drehgeschwindigkeit (B), einer zweiten, mittleren Drehgeschwindigkeit (M) und einer dritten, hohen Drehgeschwindigkeit (A) betrieben werden kann, wobei die Abflussleitung (9) eine erste siphon-artige Einrichtung (9', 9") mit einem vorgegebenen Überlaufpegel (L) umfasst, wobei die Abflussleitung (9) stromauf davon über eine hydraulisch gesteuerte Ventileinrichtung (14) mit dem Vorratsbehälter (12) verbunden ist, wenigstens eine Ausdrückervorrichtung (22), die den Vorratsbehälter (12) mit dem Einlass (17) der Pumpe (7) über eine weitere siphon-artige Einrichtung (20) mit einem vorgegebenen Überlaufpegel (L2) in Verbindung bringen kann.

2. Automatische Spülmaschine nach Anspruch 1, **dadurch gekennzeichnet, dass** der Überlaufpegel (L) der ersten siphon-artigen Einrichtung (9', 9") niedriger ist als der Überlaufpegel (L2) der weiteren siphon-artigen Einrichtung (20).

3. Automatische Spülmaschine nach Anspruch 2, **dadurch gekennzeichnet, dass** der Vorratsbehälter (12) wenigstens eine Entlüftungsöffnung (23) umfasst, die mit der Außenumgebung auf einem höheren Pegel als der Überlaufpegel (L2) der weiteren siphon-artigen Einrichtung (20) in Verbindung steht.

4. Automatische Spülmaschine nach Anspruch 1, **dadurch gekennzeichnet, dass** die weitere siphon-artige Einrichtung (20) einen aufsteigenden Abschnitt (20') umfasst, der sich im Wesentlichen vom Boden des Vorratsbehälters (12) aus erstreckt.

5. Automatische Spülmaschine nach Anspruch 1, **dadurch gekennzeichnet, dass** die Abflussleitung (9) mit dem Boden des Vorratsbehälters (12) über ein im Wesentlichen vertikales Rohr (13) verbunden ist, an dem die hydraulisch gesteuerte Ventileinrichtung (14) vorhanden ist.

6. Automatische Spülmaschine nach Anspruch 1, **dadurch gekennzeichnet, dass** die Ventileinrichtung (14) eine Kammer (15) umfasst, die mit einer unteren Öffnung (16) und einer oberen Öffnung (18) versehen ist, die mit der Abflussleitung (9) bzw. dem Vorratsbehälter (12) in Verbindung stehen, wobei die Kammer (15) wenigstens eine Verschlusseinrichtung (19) umfasst, die ein größeres spezifisches Gewicht als Wasser hat und die Öffnungen (16, 18) im Wesentlichen wahlweise verschließen kann.

7. Automatische Spülmaschine nach Anspruch 6, **dadurch gekennzeichnet, dass** die obere Öffnung (18) der Kammer (15) ein begrenztes Hindurchtreten von Wasser auch in dem Zustand ermöglicht, in dem sie mit der Verschlusseinrichtung (19) im Wesentlichen verschlossen wird.

8. Automatische Spülmaschine nach Anspruch 1, **dadurch gekennzeichnet, dass** die Ventileinrichtung (14) normalerweise geschlossen ist und sich nur dann öffnet, wenn die Pumpe (7) mit der niedrigen Umdrehungsgeschwindigkeit (B) betrieben wird, und der Vorratsbehälter (12) nicht auf seinen maximalen Pegel gefüllt ist.

9. Automatische Spülmaschine nach Anspruch 1, **dadurch gekennzeichnet, dass** der Ausdrücker (22) an dem Einlass (17) der Pumpe (7) angeordnet ist und die weitere siphon-artige Einrichtung (20) nur dann füllt, wenn der Vorratsbehälter (12) im Wesentlichen voll Wasser ist und die Pumpe (7) mit der hohen Umdrehungsgeschwindigkeit (A) betrieben wird.

## Revendications

1. Machine à laver automatique comprenant une cuve de lavage (5) connectée à un conduit de vidange par l'intermédiaire d'une pompe (7) et pouvant être remplie d'eau afin de mener à bien, sous le contrôle d'une unité de commande de séquence de programme (4), des cycles de fonctionnement comprenant au moins une phase de lavage et / ou une phase de rinçage, ladite machine à laver comprenant en outre au moins un réservoir (12) adapté pour stocker au moins une partie de l'eau en provenance d'au moins l'une desdites phases en vue de réutiliser ladite eau au cours de la phase de fonctionnement qui suit, **caractérisée en ce que** ladite pompe (7) peut fonctionner de manière sélective, grâce à l'unité de commande de séquence de programme (4) à une première vitesse de rotation basse (B), à une seconde vitesse de rotation intermédiaire (M) et à une troisième vitesse de rotation élevée (A) de celle-ci, ledit conduit de vidange (9) comprenant des premiers moyens de type siphon (9', 9") ayant un niveau de trop-plein prédéterminé (L), en amont duquel ledit conduit de vidange (9) est connecté au dit réservoir (12) par l'intermédiaire de moyens de vanne à commande hydraulique (14), au moins un dispositif d'évacuation (22) étant adapté pour mettre le réservoir (12) en communication avec l'admission (17) de la pompe (7) par l'intermédiaire d'autres moyens de type siphon (20) ayant un niveau de trop-plein (L2) prédéterminé.

2. Machine à laver automatique selon la revendication 1, **caractérisée en ce que** le niveau de trop-plein (L) desdits premiers moyens de type siphon (9', 9") est plus bas que le niveau de trop-plein (L2) desdits autres moyens de type siphon (20).

3. Machine à laver automatique selon la revendication 2, **caractérisée en ce que** ledit réservoir (12) comprend au moins une ouverture de mise à l'air (23) en communication avec le milieu extérieur située à un niveau plus élevé que ledit niveau de trop-plein (L2) desdits autres moyens de type siphon (20).

4. Machine à laver automatique selon la revendication 1, **caractérisée en ce que** lesdits autres moyens de type siphon (20) comprennent une partie montante (20') qui s'étend essentiellement à partir du fond dudit réservoir (12).

5. Machine à laver automatique selon la revendication 1, **caractérisée en ce que** ledit conduit de vidange (9) est connecté au fond dudit réservoir (12) par l'intermédiaire d'un tuyau essentiellement vertical (13) avec lequel il est fourni en correspondance lesdits moyens de vanne à commande hydraulique (14).

6. Machine à laver automatique selon la revendication 1, **caractérisée en ce que** lesdits moyens de vanne (14) comprennent une chambre (15) comportant une ouverture inférieure (16) et une ouverture supérieure (18) respectivement en communication avec ledit conduit de vidange (9) et le réservoir (12), dans lesquels ladite chambre (15) loge au moins un clapet d'arrêt (19) dont la masse volumique est plus élevée que celle de l'eau et qui est adapté pour fermer essentiellement lesdites ouvertures (16, 18) de manière sélective.

7. Machine à laver automatique selon la revendication 6, **caractérisée en ce que** ladite ouverture supérieure (18) de ladite chambre (15) est adaptée pour permettre une infiltration étalonnée d'eau au travers de celle-ci même dans un état où elle est essentiellement fermée par ledit clapet d'arrêt (19).

8. Machine à laver automatique selon la revendication 1, **caractérisée en ce que** lesdits moyens de vanne (14) sont normalement fermés et adaptés de manière à s'ouvrir uniquement lorsque ladite pompe (7) fonctionne à ladite vitesse de rotation basse (B) de celle-ci et que le réservoir (12) n'est pas rempli à son niveau maximal.

9. Machine à laver automatique selon la revendication 1, **caractérisée en ce que** ledit dispositif d'évacuation (22) est aménagé de manière à correspondre à l'admission (17) de la pompe (7) et est adapté pour amorcer uniquement lesdits moyens de type siphon (20), lorsque le réservoir (12) est essentiellement rempli d'eau et que la pompe (7) fonctionne à ladite vitesse de rotation élevée (A) de celle-ci.
